# EUROPÄISCHE PATENTANMELDUNG

(11) **EP 4 037 134 A1**
(43) Veröffentlichungstag der Anmeldung: **03.08.2022**
(21) Anmeldenummer: 21154437.4
(22) Anmeldetag: 29.01.2021
(51) Int. Cl.: H02J 3/48, H02J 3/50

(54) **UNTERERREGUNGSSCHUTZ FÜR NAHEGELEGENE, KONVENTIONELLE KRAFTWERKE DURCH WINDENERGIEANLAGEN**

(71) Anmelder: Wobben Properties GmbH, 26607 Aurich (DE)
(72) Erfinder: BROMBACH, Johannes, 13437 Berlin (DE)
(74) Vertreter: Eisenführ Speiser

(57) **Zusammenfassung**

Die vorliegende Erfindung betrifft ein Verfahren zum Steuern einer Windenergieanlage oder eines Windparks, umfassend die Schritte: Austauschen elektrischer Wirk- und/oder Blindleistung an einem Netzanschlusspunkt mit einem elektrischen Versorgungsnetz, welches ein konventionelles Kraftwerk aufweist; Feststellen eines Blindleistungsbedarfes des elektrischen Versorgungsnetzes; Ändern des Austausches der elektrischen Blindleistung an dem Netzanschlusspunkt mit dem elektrischen Versorgungsnetz in Abhängigkeit des Blindleistungsbedarfes des elektrischen Versorgungsnetzes, um das konventionelle Kraftwerk zu stützen.

## Beschreibung

Die vorliegende Erfindung betrifft ein Verfahren zum Steuern einer Windenergieanlage und/oder eines Windparks sowie eine solche Windenergieanlage und/oder einen solchen Windpark.

Windenergieanlagen bzw. Windparks sind allgemein bekannt und werden insbesondere dazu verwendet, elektrische Wirkleistung zu erzeugen.

Die elektrische Wirkleistung wird dann üblicherweise weise mittels eines elektrischen Versorgungsnetzes an entsprechende Verbraucher verteilt.

Das elektrische Versorgungsnetz weist üblicherweise eine Vielzahl von weiteren elektrischen Erzeugern, wie bspw. konventionellen Kraftwerken, und/oder elektrischen Verbrauchern, wie bspw. Hochöfen, auf.

Konventionelle Kraftwerke, wie bspw. Kohlekraftwerke, weisen dabei zumeist einen Synchrongenerator auf, deren Arbeitspunkt vom Zustand des elektrischen Versorgungsnetzes abhängig ist, insbesondere von der Netzspannung und/oder von der Netzfrequenz.

Diese Abhängigkeit und die Tatsache, dass Synchrongeneratoren einen beschränkten Arbeitsbereich aufweisen, können dazu führen, dass ein Synchrongenerator eines konventionellen Kraftwerkes durch Änderungen des Zustandes des elektrischen Versorgungsnetzes instabil wird.

Es kann also dazu kommen, dass der Synchrongenerator in suboptimale oder gar instabile Arbeitspunkte rutscht, wenn bspw. große Lastschaltungen im elektrischen Versorgungsnetz vorgenommen werden.

So können bspw. Lastschaltungen zu einem Überangebot an Blindleistung im elektrischen Versorgungsnetz führen, die den Synchrongenerator in eine Untererregung zwingen, was wiederum dazu führt, dass der Synchrongenerator eine suboptimale Wirkleistungserzeugung aufweist oder gar instabil wird.

Aufgabe der vorliegenden Erfindung ist es daher eines der obengenannten Probleme zu adressieren. Insbesondere soll eine Möglichkeit geschaffen werden, konventionelle Kraftwerke zu stützen. Alternativ soll der allgemeine Stand der Technik verbessert werden.

Erfindungsgemäß wird somit ein Verfahren zum Steuern einer Windenergieanlage oder eines Windparks vorgeschlagen, umfassend die Schritte: Austauschen elektrischer Wirk- und/oder Blindleistung an einem Netzanschlusspunkt mit einem elektrischen Versorgungsnetz, welches ein konventionelles Kraftwerk aufweist; Feststellen eines Blindleistungsbedarfes des elektrischen Versorgungsnetzes; Ändern des Austausches der elektrischen Blindleistung an dem Netzanschlusspunkt mit dem elektrischen Versorgungsnetz in Abhängigkeit des Blindleistungsbedarfes des elektrischen Versorgungsnetzes, um das konventionelle Kraftwerk zu stützen.

Es wird also insbesondere ein, durch Windenergieanlagen realisierter Untererregungsschutz für nahegelegene, konventionelle Kraftwerke vorgeschlagen.

Insbesondere sollen konventionelle Kraftwerke mittels einer Windenergieanlage bzw. mittels eines Windparks gestützt werden, bevorzugt durch eine Blindleistungsaufnahme aus dem elektrischen Versorgungsnetz mittels der Windenergieanlage bzw. mittels des Windparks, insbesondere so, dass das konventionelle Kraftwerk bzw. der Synchrongenerator des konventionellen Kraftwerks nicht in eine Untererregung fällt.

Die Windenergieanlage bzw. der Windpark tauschen dabei zunächst, wie üblich, elektrische Wirk- und/oder Blindleistung mit dem elektrischen Versorgungsnetz aus. Hierfür kann bspw. eine übliche Regelung verwendet werden, bevorzugt als unterlagerte Regelung.

In einem nächsten Schritt wird zudem bspw. mittels einer, insbesondere überlagerten, Leistungsregelung festgestellt, ob das elektrische Versorgungsnetz einen Blindleistungsbedarf aufweist.

Der Blindleistungsbedarf des elektrischen Versorgungsnetzes kann bspw. durch eine Messung der Klemmspannung des Windparks am Netzanschlusspunkt erfolgen.

Der Blindleistungsbedarf kann aber auch durch Daten des Betreibers des konventionellen Kraftwerkes und/oder durch Daten des Betreibers des elektrischen Versorgungsnetzes ermittelt werden.

Der Blindleistungsbedarf des elektrischen Versorgungsnetzes kann dabei induktiv (Blindleistungsaufnahme) oder kapazitiv (Blindleistungsabgabe) sein.

Ist also bspw. die Klemmspannung des Windparks am Netzanschlusspunkt niedrig, so benötigt das elektrische Versorgungsnetz elektrische Blindleistung (induktiv; Blindleistungsaufnahme). Ist die Klemmspannung hoch, so weist das elektrische Versorgungsnetz zu viel elektrische Blindleistung auf (kapazitiv; Blindleistungsabgabe).

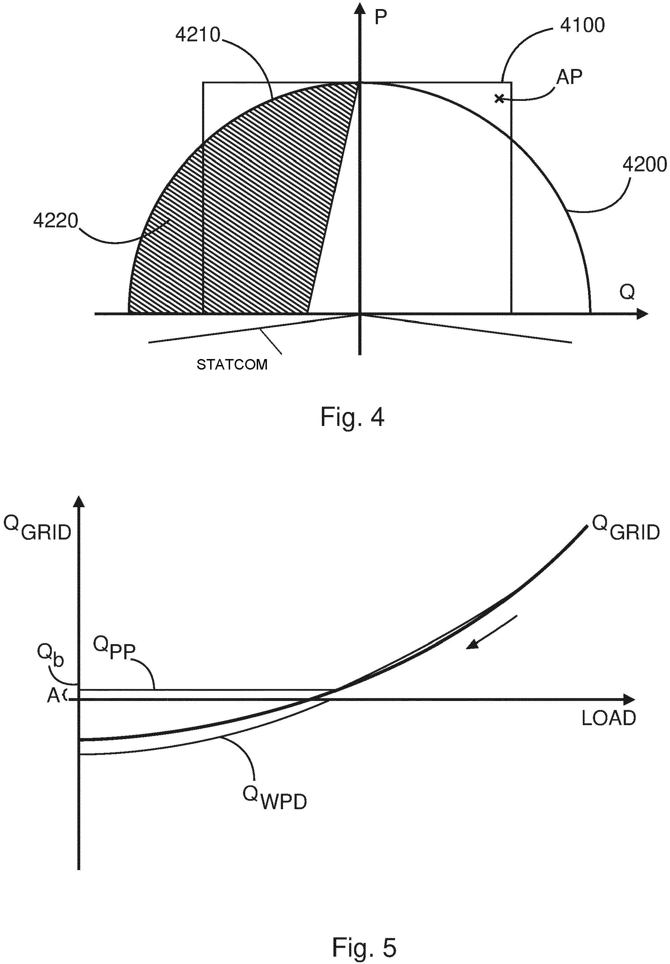

Bevorzugt findet das vorliegende Verfahren im unteren Bereich der Blindleistungsaufnahme des elektrischen Versorgungsnetzes und/oder bei Blindleistungsabgabe des elektrischen Versorgungsnetzes Anwendung. Dies ist bspw. in Fig. 5 gezeigt.

Sofern ein Blindleistungsbedarf seitens des elektrischen Versorgungsnetzes festgestellt worden ist, wird die elektrische Blindleistung der Windenergieanlage bzw. des Windparks so in Abhängigkeit des festgestellten Blindleistungsbedarfes geändert, dass es zu einer Stützung des konventionellen Kraftwerkes kommt, insbesondere so, dass der Synchrongenerator des konventionellen Kraftwerks in einem überregten Zustand ist.

Es wird also insbesondere auch vorgeschlagen, jenen Blindleistungsbedarf des elektrischen Versorgungsnetzes mit einer Windenergieanlage zu decken, welchen das konventionelle Kraftwerk nicht erbringen kann.

Optional befindet sich das elektrische Versorgungsnetz dabei in einem normalen bzw. störfallfreien Betriebszustand.

Es wird also insbesondere auch vorgeschlagen, das Verfahren während eines normalen Betriebes des elektrischen Versorgungsnetzes auszuführen, insbesondere um die Auswirkungen von Lastschaltungen innerhalb des elektrischen Versorgungsnetzes mittels Windenergieanlagen auszugleichen. Unter einem normalen Betrieb des elektrischen Versorgungsnetzes werden hierin insbesondere alle Betriebszustände bis hin zu einem Lastabwurf verstanden, also bspw. zwischen 47,5 Hz und 52,5 Hz bei einem elektrischen Versorgungsnetz mit einer Netz-Nenn-Frequenz von 50 Hz. Es handelt sich also hierbei insbesondere um einen ungestörten Betriebsmodus, also insbesondere nicht um einen blackout und/oder einen Inselnetzbetrieb.

Vorzugsweise ist das konventionelle Kraftwerk zudem als Netzbildner ausgeführt und/oder weist wenigstens einen, bevorzugt direkt gekoppelten, Synchrongenerator auf.

Als Netzbildner wird dabei insbesondere jener Erzeuger verstanden, der die Frequenz für das elektrische Versorgungsnetz bzw. einen Abschnitt des elektrischen Versorgungsnetzes vorgibt. In diesem Falle das konventionelle Kraftwerk.

Das konventionelle Kraftwerk kann dabei bspw. ein (Stein-)Kohle- oder Atomkraftwerk sein.

Bevorzugt ist die Windenergieanlage bzw. ist der Windpark in der elektrischen Nähe zum konventionellen Kraftwerk angeordnet, insbesondere so, dass der Austausch der Blindleistung der Windenergieanlage bzw. des Windparks einen Einfluss auf das konventionelle Kraftwerk hat.

Unter elektrischer Nähe ist hierin insbesondere der elektrische Leitungsabstand zu verstehen. Bevorzugt ist dieser elektrische Leitungsabstand kleiner als 100km, weiter bevorzugt kleiner als 50km.

Vorzugsweise erfolgt das Ändern des Austausches der elektrischen Blindleistung nur bis zu einem vorbestimmten Blindleistungsgrenzwert.

Es wird also insbesondere auch vorgeschlagen, das Verfahren nur in einem bestimmten Arbeitsbereich des elektrischen Versorgungsnetzes auszuführen, insbesondere wenn das elektrische Versorgungsnetz kapazitiv arbeitet. Also in den Fällen, in denen die Gefahr besteht, dass der Synchrongenerator des konventionellen Kraftwerks in die Untererregung rutscht.

Vorzugsweise ist der Blindleistungsgrenzwert, insbesondere unter Berücksichtigung einer Netzlast, so gewählt, dass ein Synchrongenerator des konventionellen Kraftwerkes einen überregten Zustand aufweist.

Es wird also insbesondere vorgeschlagen, den Blindleistungsstellbereich von Windenergieanlage und Windparks zu nutzen, um konventionelle Kraftwerke vor einer Untererregung zu schützen.

Hierfür wird insbesondere vorgeschlagen, die Netzlast zu berücksichtigen.

Unter Netzlast wird dabei insbesondere die Betriebsmittelauslastung der Betriebsmittel des elektrischen Versorgungsnetzes verstanden, also die Auslastung der Leitungen, Transformatoren und so weiter.

Vorzugsweise weist dieser überregte Zustand einen Mindestabstand zu einem untererregten Zustand aufweist.

Es wird also insbesondere auch vorgeschlagen, den Blindleistungsgrenzwert derart zu wählen, dass es zu einem Sicherheitsabstand zum untererregten Zustand bei dem konventionellen Kraftwerk kommt.

Der Blindleistungsgrenzwert wird also bewusst so gewählt, dass das Verfahren schon ausgeführt wird, wenn das konventionelle Kraftwerk noch im übererregten Zustand ist.

Vorzugsweise wird der Blindleistungsbedarf in Abhängigkeit einer Netzlast des elektrischen Versorgungsnetzes ermittelt.

Es wird also insbesondere auch vorgeschlagen, den Blindleistungsbedarf des elektrischen Versorgungsnetzes unter Berücksichtigung der Netzlast zu ermitteln.

Die Netzlast kann bspw. durch statistische Analysen und/oder Kennzahlen vom Netzbetreiber, bspw. load-flow studies, statistische Netzanalysen oder lokalen Messungen, bspw. an den Netzanschlusspunkten von (Groß-)Kraftwerken und/oder Windparks, ermittelt werden.

Erfindungsgemäß wird ferner eine Windenergieanlage und/oder ein Windpark vorgeschlagen, aufweisend: eine Steuereinheit, umfassend eine unterlagerte Regelung zum Bestimmen einer, mit dem elektrischen Versorgungsnetz auszutauschenden elektrischen Wirk- und/oder Blindleistung und eine überlagerte Regelung zum Bestimmen einer, mit dem elektrischen Versorgungsnetz auszutauschenden Blindleistung, wobei die auszutauschende Blindleistung in Abhängigkeit eines Blindleistungsbedarfes des elektrischen Versorgungsnetzes so ermittelt wird, dass ein benachbartes konventionelles Kraftwerk gestützt wird.

Vorzugsweise ist die Steuereinheit ferner dazu eingerichtet, ein vorstehend und/oder nachstehend beschriebenes Verfahren auszuführen.

Die vorliegende Erfindung wird nun nachfolgend exemplarisch und anhand von Ausführungsbeispielen unter Bezugnahme auf die begleitenden Figuren näher erläutert, wobei für gleiche oder ähnliche Baugruppen dieselben Bezugszeichen verwendet werden.
- Fig. 1: zeigt eine schematische Ansicht einer Windenergieanlage gemäß einer Ausführungsform.
- Fig. 2: zeigt eine schematische Ansicht eines elektrischen Versorgungsnetzes gemäß einer Ausführungsform.
- Fig. 3: zeigt einen schematischen Ablauf eines Verfahrens zum Steuern in einer Ausführungsform.
- Fig. 4: zeigt schematisch die Arbeitsbereiche eines konventionellen Kraftwerkes und einer Windenergieanlage gemäß einer Ausführungsform.
- Fig. 5: zeigt schematisch einen technischen Effekt des Verfahrens zum Steuern gemäß einer Ausführungsform.

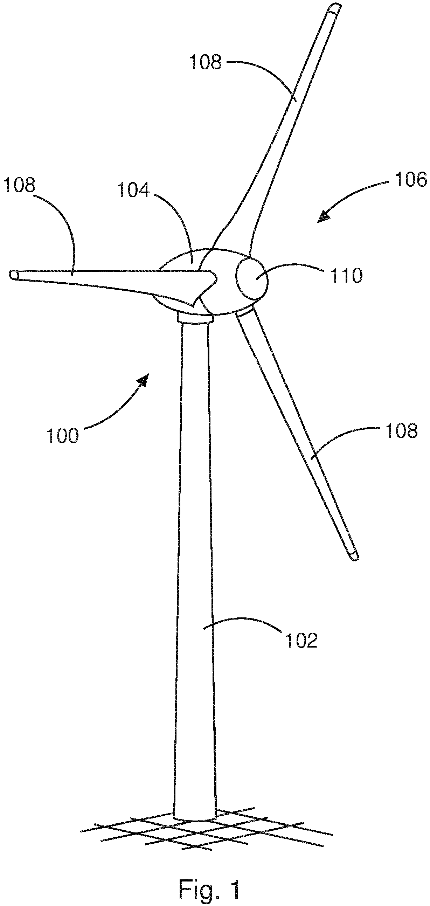

Fig. 1 zeigt eine schematische Ansicht einer Windenergieanlage 100 gemäß einer Ausführungsform.

Die Windenergieanlage 100 weist einen Turm 102 und eine Gondel 104 auf.

An der Gondel 104 ist ein aerodynamischer Rotor 106 mit drei Rotorblättern 108 und einem Spinner 110 angeordnet.

Der aerodynamische Rotor 106 wird im Betrieb durch den Wind in eine Drehbewegung versetzt und treibt dadurch einen Generator in der Gondel 104 an.

Zum Betreiben der Windenergieanlage ist ferner eine vorstehend und/oder nachstehend beschriebene Steuereinheit vorgesehen, insbesondere, um ein vorstehend und/oder nachstehend beschriebenes Verfahren zum Steuern einer Windenergieanlage auszuführen und/oder an einem vorstehend und/oder nachstehend beschriebenen Verfahren zum Steuern eines Windparks teilzunehmen.

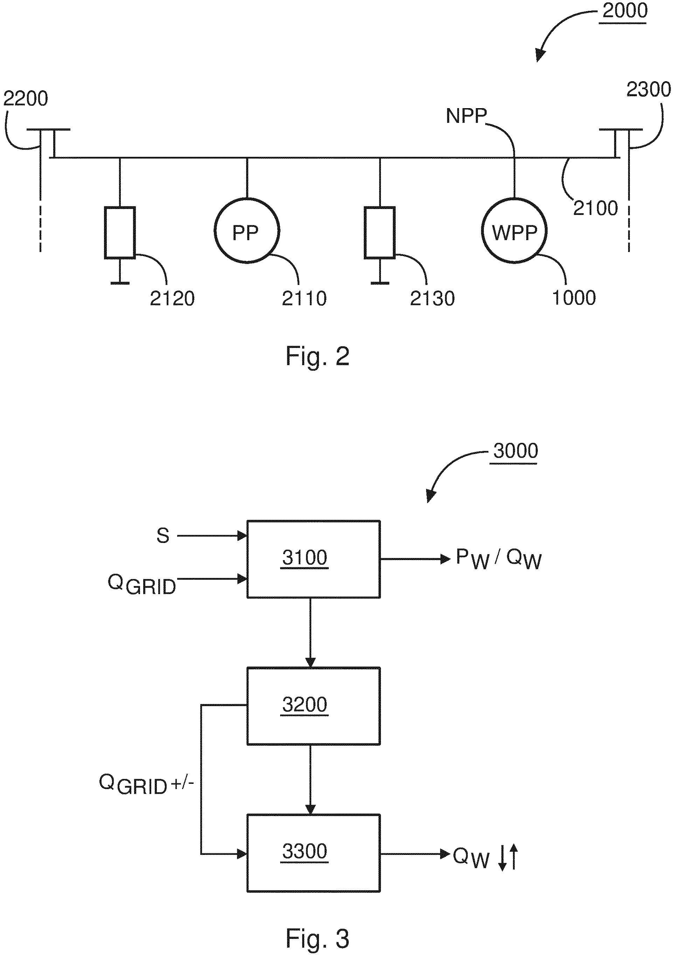

Fig. 2 zeigt eine schematische Ansicht eines elektrischen Versorgungsnetzes gemäß einer Ausführungsform.

Das elektrische Versorgungsnetz 2000 umfasst bspw. drei Netzebenen 2100, 2200, 2300.

Die Netzebene 2100 weist bspw. ein konventionelles Kraftwerk 2110, mehrere Verbraucher 2120, 2130 sowie einen vorstehend und/oder nachstehend beschriebenen Windpark 1000 auf.

Der Windpark 1000 ist an einem Netzanschlusspunkt NPP mit dem elektrischen Versorgungsnetz 200 verbunden und in der elektrischen Nähe, bspw. 40 km Leitungslänge entfernt, des konventionellen Kraftwerkes 2110 angeordnet, und umfasst eine Steuereinheit, die dazu eingerichtet ist, ein vorstehend und/oder nachstehend beschriebenes Verfahren zum Steuern eines Windparks auszuführen.

Fig. 3 zeigt einen schematischen Ablauf eines Verfahrens 3000 zum Steuern einer Windenergieanlage, insbesondere wie in Fig. 1 gezeigt, oder eines Windparks, insbesondere wie in Fig. 2 gezeigt.

In einem ersten Schritt 3100 wird elektrische Wirkleistung P_{w} und/oder elektrische Blindleistung Q_{w} an einem Netzanschlusspunkt NPP mit einem elektrischen Versorgungsnetz ausgetauscht.

Der Austausch der elektrischen Wirkleistung P_{w} und/oder elektrischen Blindleistung Q_{w} wird bspw. mittels einer unterlagerten Regelung der Steuereinheit geregelt, die mit Sollwerten S arbeitet.

Während dieses Austausches wird bspw. am Netzanschlusspunkt der Blindleistungsbedarf Q_{grid} des elektrischen Versorgungsnetzes 2000 überwacht.

In einem nächsten Schritt 3200 wird festgestellt, dass das elektrische Versorgungsnetz 2000 einen Blindleistungsbedarf Q_{grid} hat. Dieser Blindleistungsbedarf Q_{grid} kann kapazitiv Q_{grid+} oder induktiv Q_{grid-} sein.

In einem nächsten Schritt 3300 wird hieraufhin der Austausch der elektrischen Blindleistung Q_{w} geändert und zwar insbesondere in Abhängigkeit des Blindleistungsbedarfes Q_{grid} so, dass ein benachbartes, konventionelles Kraftwerk, wie bspw. in Fig. 2 gezeigt, gestützt wird.

Es wird also insbesondere vorgeschlagen, dass der Windpark bzw. die Windenergieanlage überschüssige Blindleistung aus dem elektrischen Versorgungsnetz aufnimmt, um das konventionelle Kraftwerk zu stützen.

Das Verfahren ist dabei besonders gut dazu geeignet, einen Synchrongenerator eines konventionellen Kraftwerkes vor einer Untererregung zu schützen.

Fig. 4 zeigt schematisch die Arbeitsbereiche eines konventionellen Kraftwerkes und einer Windenergieanlage.

Die Arbeitsbereiche sind in Wirk- und Blindleistungsquadranten P/Q abgetragen.

Die Windenergieanlage weist einen Vollumrichter auf, welcher einen weiten Wirk- und Blindleistungsstellbereich aufweist. Dies ist durch den im Wesentlichen viereckigen Arbeitsbereich 4100 angedeutet. Die Windenergieanlage ist dabei insbesondere in der Lage, jeden beliebigen Arbeitspunkt AP einzunehmen, bspw. volle Wirkleistung bei null Blindleistung oder volle Blindleistung bei null Wirkleistung.

Das konventionelle Kraftwerk weist einen Synchrongenerator auf, welcher einen beschränkten Wirk- und Blindleistungsstellbereich aufweist. Dies ist durch den im Wesentlichen halbkreisförmigen Arbeitsbereich 4200 angedeutet. Der Synchrongenerator ist dabei insbesondere nicht in der Lage jeden beliebigen Arbeitspunkt AP anzufahren oder stabil zu betreiben.

Der Synchrongenerator weist zudem Teilarbeitsbereiche 4210, 4220 in der Untererregung auf.

Im Teilarbeitsbereich der starken Untererregung 4220 kann der Synchrongenerator instabil werden.

In diesen Arbeitsbereich 4220 kann der Synchrongenerator bspw. fallen, wenn es zu einem großen Lastabwurf im elektrischen Versorgungsnetz kommt.

Um dies zu verhindern, wird vorgeschlagen, eine Windenergieanlage oder einen Windpark stützend zu verwenden.

Springt also bspw. die Spannung im elektrischen Versorgungsnetz durch Lastabwurf, kann die Windenergieanlage bzw. der Windpark die Spannung für einige Minuten aktiv senken und so verhindern, dass der Synchrongenerator des konventionellen Kraftwerkes in einen instabilen Arbeitsbereich fällt.

Fig. 5 zeigt schematisch einen technischen Effekt 5000 des Verfahrens zum Steuern gemäß einer Ausführungsform.

Der technische Effekt 5000 stellt sich insbesondere in Bezug auf den Blindleistungsbedarf des elektrischen Versorgungsnetzes 2000 ein, wenn zur Steuerung die Netzlast berücksichtigt wird.

Hierfür ist exemplarisch der Blindleistungsbedarf Q_{grid} des elektrischen Versorgungsnetzes über der Netzlast abgetragen.

Sinkt die Netzlast LOAD, so geht auch der Blindleistungsbedarf Q_{grid} des elektrischen Versorgungsnetzes nach unten.

Die Netzlast LOAD kann dabei soweit sinken, dass das elektrische Versorgungsnetz und somit auch der Synchrongenerator des konventionellen Kraftwerkes in eine Untererregung fällt.

Dies kann bspw. mittels eines Windparks verhindert werden, wie bspw. vorstehend beschrieben.

In einer bevorzugten Ausführungsform wird zudem ein Blindleistungsgrenzwert Q_{g} verwendet. Dieser Blindleistungsgrenzwert Q_{g} wird bevorzugt mit einem Abstand A zur Untererregung gewählt.

Unterschreitet der Blindleistungsbedarf Q_{grid} des elektrischen Versorgungsnetzes diesen Blindleistungsgrenzwert Q_{g}, nimmt die Windenergieanlage bzw. der Windpark entsprechende Blindleistung auf, um das konventionelle Kraftwerk zu stützen.

Es wird also auch vorgeschlagen, dass die Windenergieanlage bzw. der Windpark bewusst und frühzeitig in den Blindleistungsbedarf des elektrischen Versorgungsnetzes eingreift.

### Bezuqszeichenliste

- 100: Windenergieanlage
- 102: Turm, insbesondere der Windenergieanlage
- 104: Gondel, insbesondere der Windenergieanlage
- 106: aerodynamischer Rotor, insbesondere der Windenergieanlage
- 108: Rotorblatt, insbesondere der Windenergieanlage
- 110: Spinner, insbesondere der Windenergieanlage
- 1000: Windpark, insbesondere umfassend eine Vielzahl von Windenergieanlagen
- 2000: elektrisches Versorgungsnetz
- 2100: Netzebene, insbesondere des elektrischen Versorgungsnetzes
- 2110: konventionelles Kraftwerk
- 2120: Verbraucher
- 2130: Vebraucher
- 2200: Netzebene, insbesondere des elektrischen Versorgungsnetzes
- 2300: Netzebene, insbesondere des elektrischen Versorgungsnetzes
- 3000: Verfahren zum Steuern einer Windenergieanlage oder eines Windparks
- 3100: Verfahrensschritt: Austauschen
- 3200: Verfahrensschritt: Feststellen
- 3300: Verfahrensschritt: Ändern
- 4000: Arbeitsbereiche
- 4100: Arbeitsbereich einer Windenergieanlage
- 4200: Arbeitsbereich eines konventionellen Kraftwerkes
- 4210: Teilarbeitsbereich
- 4220: Teilarbeitsbereich
- 5000: technischer Effekt.
- A: Abstand, insbesondere zur Untererregung
- AP: Arbeitspunkt
- LOAD: Netzlast
- P_{w}: mit dem elektrischen Versorgungsnetz ausgetauschte Wirkleistung
- Q_{w}: mit dem elektrischen Versorgungsnetz ausgetauschte Blindleistung
- Q_{grid}: Blindleistungsbedarf, insbesondere des elektrischen Versorgungsnetzes
- Q_{g}: Blindleistungsgrenzwert
- S: Sollwerte, insbesondere für die Windenergieanlage bzw. den Windpark
- PP: konventionelles Kraftwerk
- NPP: Netzanschlusspunkt
- WPP: Windpark

## Patentansprüche

1. Verfahren zum Steuern einer Windenergieanlage oder eines Windparks, umfassend die Schritte:
- Austauschen elektrischer Wirk- und/oder Blindleistung an einem Netzanschlusspunkt mit einem elektrischen Versorgungsnetz, welches ein konventionelles Kraftwerk aufweist;
- Feststellen eines Blindleistungsbedarfes des elektrischen Versorgungsnetzes;
- Ändern des Austausches der elektrischen Blindleistung an dem Netzanschlusspunkt mit dem elektrischen Versorgungsnetz in Abhängigkeit des Blindleistungsbedarfes des elektrischen Versorgungsnetzes, um das konventionelle Kraftwerk zu stützen.

2. Verfahren zum Steuern einer Windenergieanlage oder eines Windparks nach Anspruch 1, wobei
- sich das elektrische Versorgungsnetz in einem normalen bzw. störfallfreien Betriebszustand befindet.

3. Verfahren zum Steuern einer Windenergieanlage oder eines Windparks nach Anspruch 1 oder, wobei
- das konventionelle Kraftwerk als Netzbildner ausgebildet ist und/oder einen Synchrongenerator aufweist.

4. Verfahren zum Steuern einer Windenergieanlage oder eines Windparks nach wenigstens einem der vorstehenden Ansprüche, wobei
- die Windenergieanlage bzw. der Windpark in der elektrischen Nähe zum konventionellen Kraftwerk angeordnet ist.

5. Verfahren zum Steuern einer Windenergieanlage oder eines Windparks nach wenigstens einem der vorstehenden Ansprüche, wobei
- das Ändern des Austausches der elektrischen Blindleistung nur bis zu einem vorbestimmten Blindleistungsgrenzwert.

6. Verfahren zum Steuern einer Windenergieanlage oder eines Windparks nach wenigstens einem der vorstehenden Ansprüche, wobei
- der Blindleistungsgrenzwert so, insbesondere unter Berücksichtigung einer Netzlast, gewählt ist, dass ein Synchrongenerator des konventionellen Kraftwerkes einen überregten Zustand aufweist.

7. Verfahren zum Steuern einer Windenergieanlage oder eines Windparks nach Anspruch 6, wobei
- der überregte Zustand einen Mindestabstand zu einem untererregten Zustand aufweist.

8. Verfahren zum Steuern einer Windenergieanlage oder eines Windparks nach wenigstens einem der vorstehenden Ansprüche, wobei
- der Blindleistungsbedarf in Abhängigkeit einer Netzlast des elektrischen Versorgungsnetzes ermittelt wird.

9. Verfahren zum Steuern einer Windenergieanlage oder eines Windparks nach Anspruch 8, wobei
- die Netzlast ermittelt wird durch statistische Analysen.

10. Windenergieanlage oder Windpark, aufweisend:
- eine Steuereinheit, umfassend:
- eine unterlagerte Regelung zum Bestimmen einer, mit dem elektrischen Versorgungsnetz auszutauschenden elektrischen Wirk- und/oder Blindleistung;
- eine überlagerte Regelung zum Bestimmen einer, mit dem elektrischen Versorgungsnetz auszutauschen Blindleistung, wobei die auszutauschende Blindleistung in Abhängigkeit eines Blindleistungsbedarfes des elektrischen Versorgungsnetzes so ermittelt wird, dass ein benachbartes konventionelles Kraftwerk gestützt wird.

11. Windenergieanlage oder Windpark nach Anspruch 10, wobei
- die Steuereinheit dazu eingerichtet ist, ein Verfahren nach einem der Ansprüche 1 bis 9 auszuführen.
